# EUROPÄISCHE PATENTSCHRIFT

(11) **EP 1 194 598 B1**
(45) Veröffentlichungstag und Bekanntmachung des Hinweises auf die Patenterteilung: **27.08.2003**
(21) Anmeldenummer: 00927099.2
(22) Anmeldetag: 28.04.2000
(51) Int. Cl.: C21D 8/04, C22C 38/04, C22C 38/12

(54) **VERWENDUNG EINES STAHLS FÜR DIE HERSTELLUNG VON BAUTEILEN VON BILDRÖHREN UND VERFAHREN ZUR HERSTELLUNG VON BAUTEILEN FÜR BILDRÖHREN AUS STAHLBLECH**
USE OF A STEEL FOR PRODUCING COMPONENTS OF PICTURE TUBES AND METHOD FOR PRODUCING COMPONENTS OF PICTURE TUBES MADE OF SHEET STEEL
UTILISATION D'UN ACIER POUR LA PRODUCTION DE COMPOSANTS DE TUBES CATHODIQUES , ET PROCEDE DE PRODUCTION DE COMPOSANTS POUR TUBES CATHODIQUE A PARTIR DE TOLESD'ACIER

(30) Priorität: 08.05.1999 DE 19921328
(43) Veröffentlichungstag der Anmeldung: 10.04.2002
(73) Patentinhaber: ThyssenKrupp Stahl AG, 47166 Duisburg (DE); Wickeder Westfalenstahl Holding GmbH, 58739 Wickede (Ruhr) (DE)
(72) Erfinder: BRANDENBURG, Volker, D-45481 Mülheim (DE); SCHÜTZ, Carl-Heinz, D-47199 Duisburg (DE); HELMETAG, Klaus-Peter, D-58093 Hagen (DE)
(74) Vertreter: Rox, Thomas Dr.
(86) Internationale Anmeldenummer: EP0003858
(87) Internationale Veröffentlichungsnummer: WO00068444

(56) Entgegenhaltungen:
- PATENT ABSTRACTS OF JAPAN vol. 015, no. 508 (C-0897), 24. Dezember 1991 (1991-12-24) -& JP 03 223441 A (NIPPON STEEL CORP), 2. Oktober 1991 (1991-10-02)
- PATENT ABSTRACTS OF JAPAN vol. 1999, no. 05, 31. Mai 1999 (1999-05-31) -& JP 11 050207 A (NIPPON STEEL CORP), 23. Februar 1999 (1999-02-23)
- PATENT ABSTRACTS OF JAPAN vol. 1998, no. 03, 27. Februar 1998 (1998-02-27) -& JP 09 296255 A (SONY CORP;TOYO KOHAN CO LTD), 18. November 1997 (1997-11-18)
- PATENT ABSTRACTS OF JAPAN vol. 1996, no. 01, 31. Januar 1996 (1996-01-31) -& JP 07 233440 A (NKK CORP), 5. September 1995 (1995-09-05)
- PATENT ABSTRACTS OF JAPAN vol. 1995, no. 11, 26. Dezember 1995 (1995-12-26) -& JP 07 197185 A (NKK CORP), 1. August 1995 (1995-08-01)

## Beschreibung

Die Erfindung betrifft die Verwendung eines Stahls zur Herstellung von Masken, Abschirmkappen oder Rahmen für Bildröhren. Darüber hinaus betrifft die Erfindung ein Verfahren zur Herstellung von Bauteilen für Bildröhren unter Verwendung eines solchen Stahls.

Bildröhren von Fernsehern, Computermonitoren oder dergleichen werden mit sogenannten "Schatten-, Loch- oder Grillmasken" ausgestattet. Diese Masken bestehen aus einem 0,05 bis 0,2 mm dicken Stahlblech und sind mit einer Vielzahl von regelmäßig angeordneten Löchern oder Schlitzen versehen. Ihre Funktion besteht darin, den Kathodenstrahl der Bildröhre vor seinem Auftreffen auf die rotes, blaues oder grünes Licht emittierenden Beschichtungen des Bildschirms zu begrenzen. Auf diese Weise kann ein Bild von großer Abbildungsschärfe und hohem Kontrast auf dem für den Betrachter sichtbaren Schirm erzeugt werden. Darüber hinaus bilden die Masken eine Abschirmung der Bildröhre gegen äußere magnetische Einflüsse und verhindern gleichzeitig das Austreten von übermäßiger Elektronenstrahlung in die Umgebung.

Um eine wirkungsvolle Abschirmung zu gewährleisten, bestehen die Masken in der Regel aus einem weichmagnetischen Werkstoff auf Basis eines unlegierten, kohlenstoffarmen, mit Cr angereicherten und mit Aluminium beruhigten Stahls. Ein solcher Stahl wird üblicherweise in einem Konverter erschmolzen und zu Brammen oder Dünnbrammen vergossen. Diese werden zunächst warmgewalzt, dann gebeizt, anschließend ein erstes mal kaltgewalzt und daraufhin einem ersten Entkohlungsglühen unterzogen, um einen extrem geringen Kohlenstoff-Gehalt zu erreichen. Das so geglühte Band wird abermals kaltgewalzt, bevor die Lochungen oder Schlitze für die Schattenmasken in einem Photoätzverfahren hergestellt werden.

Aus dem gelochten Ausgangsmaterial werden Blechzuschnitte erstellt. Im Fall der geschlitzten Masken werden diese in einen Rahmen eingebracht, der die dünnen, stegartigen Schlitzbegrenzungen unter einer mechanischen Spannung straff hält. Im Fall der gelochten Masken werden die Blechzuschnitte gegebenenfalls einer rekristallisierenden Glühung unterzogen und schließlich durch Tief- und Streckzug verformt. Sowohl bei den Schlitz- als auch bei den Lochmasken wird abschließend eine Schlußglühung durchgeführt, bei der auch die gewünschte Schwärzung der Maske erreicht wird.

Der Nachteil der üblichen Vorgehensweise besteht darin, daß zum einen das Entkohlungsglühen langsam mit offenem Wickel in einem Haubenglühofen durchgeführt werden muß. Zum anderen ist während des zweiten Kaltwalzschritts die Walzgeometrie mit höchster Präzision einzuhalten, so daß an das jeweils eingesetzte Walzwerk ebenfalls höchste Anforderungen hinsichtlich der Steuerbarkeit und Maßhaltigkeit gestellt werden müssen.

Aus dem Herstellverfahren und der während des Einsatzes an Masken in Bildröhren gestellten Anforderungen ergibt sich, daß das Ausgangsmaterial einen guten Reinheitsgrad und definierte Korngrößen aufweisen muß, um ein sauberes Ätzbild zu gewährleisten. Darüber hinaus muß das Material streckgrenzendehnungsfrei sein, um es ohne die Gefahr der Entstehung von Verformungslinien umformen zu können.

Das Material für gespannte Masken muß eine hohe Formhaltigkeit auch unter den im eingebauten Zustand wirkenden hohen Spannkräften aufweisen, wobei diese Formhaltigkeit auch unter Wärmeeinfluß während der weiteren Herstellungsschritte gewährleistet sein muß. Andernfalls besteht die Gefahr, daß es durch die Relaxation des Maskenmaterials zu einer Verformung der in das Material eingebrachten Löcher oder Schlitze kommt. Ein derartiger Verlust an Spannung durch übermäßiges Nachgeben des Materials, durch welches das jeweilige Bauteil seine Form verliert, führt insbesondere bei den mit regelmäßig angeordneten Öffnungen von geringem Durchmesser versehenen Masken wegen der dann nicht mehr einwandfreien Abbildung der Farbpunkte zu einer Farbverschiebung bei der Darstellung des Bildes auf dem Bildschirm.

In der japanischen Offenlegungsschrift JP 62249339 A ist ein Extra-Low-Carbon-Stahl angegeben, der die angegebenen Anforderungen erfüllen soll. Der betreffende Stahl weist neben Eisen und unvermeidlichen Verunreinigungen einen Stickstoffgehalt von 0,0040 - 0,01 %, einen C-Gehalt unter 0,03 %, einen Si-Gehalt unter 0,03 %, und einen Gehalt an Al_{säurelöslich} von weniger als 0,1 % auf (alle Angaben in Gewichts-%). Durch den Stickstoffgehalt von mindestens 40 ppm wird die Dehnungsrelaxation während des Rekristallisationsglühens vermieden. Dabei ist festgestellt worden, daß die Relaxation um so geringer ausfällt, je höher der Stickstoffgehalt ist. Empfohlen werden daher in der japanischen Offenlegungsschrift Stickstoffgehalte von 0,0055 - 0,0075 Gewichts-%. Stickstoffgehalte in dieser Höhe sind jedoch unter Berücksichtigung der üblicherweise angewendeten Verfahrensschritte bei der Erzeugung des Stahls unerwünscht.

Neben dem voranstehend erläuterten Stand der Technik ist aus der JP 3-223441 A ein so genannter "totweicher" ("dead soft") Stahl für Emaillierblech bekannt, der als Zwangsbestandteil 0,005 - 0,025 % Sauerstoff aufweist. Gleichzeitig enthält der bekannte Stahl Bor in Gehalten von 0,005 - 0,025 %. Die hohen Gehalte an Sauerstoff führen zur Entstehung von Oxidprodukten, die als Oberflächendefekte in Form von Erhebungen oder Einsenkungen zu Tage treten. Um diese Oberflächendefekte legt sich Emallierschicht bzw. dringt in sie ein, so dass die gewünschte intensive Verbindung zwischen Beschichtung und Blechsubstrat sicher erzeugt und dauerhaft aufrechterhalten wird. Ein derart beschaffenes Blech ist jedoch ungeeignet für die Herstellung von Bauteilen für Bildröhren, da es sich schlecht walzen lässt und die hohen Oxidanteile sich negativ auf die Ätzbarkeit auswirken.

Ein anderer totweicher Stahl ist aus der JP 7-233440 A bekannt. Dieser Stahl wird zu Warmband verarbeitet, das besonders zum Tiefziehen geeignet ist. Zu diesem Zweck weist der bekannte Stahl vergleichbar hohe A1-Gehalte und ebenso hohe Si-Gehalte auf. Derart weiche Stähle sind ebenfalls nicht zum Herstellen von Bauteilen geeignet.
Unter der hohen Belastung, wie sie Bauteile von Bildröhren aufnehmen müssen, erweisen sie sich nicht als ausreichend formstabil.

Die Aufgabe der Erfindung besteht darin, einen zur Herstellung von Bauteilen für Bildröhren geeigneten Stahlwerkstoff anzugeben, der hervorragende Eigenschaften im Hinblick auf die an derartige Bauteile gestellten Anforderungen aufweist. Darüber hinaus soll ein Verfahren zur Herstellung von Bauteilen für Bildröhren unter Verwendung eines solchen Stahls angegeben werden.

Diese Aufgabe wird dadurch gelöst, dass für die Herstellung von Masken, Abschirmkappen oder Rahmen für Bildröhren ein Stahl verwendet wird, der folgende Zusammensetzung besitzt (in Gewichts-%):

| | |
|---|---|
| C | 0,0001 - 0,01 %, |
| N | 0,0001 - 0,0035 %, |
| Mn | 0,01 - 0,7 %, |
| Si | < 0,03 %, |
| P | < 0,1 %, |
| S: | < 0,1 %, |
| Al_{säurelöslich} | < 0,003 %, |
| Cr | < 0,1 %, |
| Mo | 0,0001 - 0,08 %, |
| Sn | < 0,015 %, |
| W | ≤ 0,3 % |

und als Rest Eisen und übliche Verunreinigungen für die Herstellung von Masken, Abschirmkappen oder Rahmen für Bildröhren.

Der derart zusammengesetzte Stahl weist trotz seines geringen Stickstoffgehaltes Eigenschaften auf, durch welche er sich in hervorragender Weise zur Herstellung von Bauteilen für Bildröhren eignet. Überraschender Weise ist festgestellt worden, daß die beim Stand der Technik sich erst bei höheren N-Gehalten einstellende geringe Neigung zur Relaxation im umgeformten, geglühten Zustand auch bei geringeren Stickstoffgehalten erreicht werden kann, wenn gleichzeitig ein geringerer Kohlenstoff-Gehalt berücksichtigt wird. Die Zusätze an Molybdän und Zinn verbessern zusätzlich die Kriecheigenschaften im Eisenmischkristall. Im Ergebnis stellt die Erfindung einen Stahl zur Verfügung, der es ermöglicht, Bauteile für Bildröhren, insbesondere Loch- oder Grillmasken, herzustellen, bei denen eine Relaxation des Materials während des Herstellungsprozesses wirksam eingeschränkt bzw. verhindert ist.

Der Gehalt an Kohlenstoff ist erfindungsgemäß auf maximal 0,01 Gewichts-% beschränkt, weil bei darüber hinausgehenden Gehalten die Anteile an Carbiden erhöht werden. Diese Erhöhung führt zu einer Abnahme der Ätzbarkeit des Stahles. Zudem wird bei Überschreiten des erfindungsgemäßen Maximalgehaltes an Kohlenstoff die Menge des gelösten Kohlenstoffs in dem Stahl erhöht, was eine die Verformbarkeit des Bleches negativ beeinflussende Erhöhung der Fließfestigkeit und der Fließgrenzendehnung nach dem abschließenden Glühen hervorruft. Daher sollte der Kohlenstoff-Gehalt eines erfindungsgemäßen Stahls so gering wie möglich sein. Gemäß einer bevorzugten Ausgestaltung der Erfindung ist der Kohlenstoff-Gehalt daher auf weniger als 0,008 Gewichts-% begrenzt.

Der Gehalt an Stickstoff beeinflußt wegen dessen starker interstitieller Wirkung in Verbindung mit der ebenso interstitiellen Wirkung von Kohlenstoff die Kriechbeständigkeit. Daher ist der Stickstoff-Gehalt erfindungsgemäß auf Werte unterhalb 0,0035 Gewichts-% beschränkt. Stickstoff-Gehalte unterhalb 0,003 Gewichts-% sind in diesem Zusammenhang bevorzugt, weil sich bei derart niedrigen Gehalten eine weiter verbesserte Kriechbeständigkeit einstellt. Durch die erfindungsgemäße Begrenzung des Stickstoff-Gehalts wird im Hinblick auf die Anwesenheit von Aluminium zudem eine Erhöhung des Anteils an ungünstigen AlN verhindert. Durch AlN-Ausscheidungen wird die Ätzbarkeit eines aus dem Stahl hergestellten Blechs ebenfalls eingeschränkt und dessen Verformbarkeit herabgesetzt.

Aufgrund der mit der Absenkung des Aluminium-Gehaltes einhergehenden Verringerung des Anteils an AlN und der damit erzielten Verbesserung der Ätzbarkeit ist erfindungsgemäß zusammengesetzter Stahl besonders zur Herstellung von Bauteilen von Bildröhren geeignet. Gleichzeitig wird durch die weitestgehende Vermeidung von AlN der gesamte Stickstoff in Lösung (interstitiell) gehalten. Zusammen mit dem bei geringen Kohlenstoff-Gehalten ebenfalls in Lösung vorliegenden Kohlenstoff entfaltet Stickstoff hinsichtlich einer Dehnungsverminderung durch Blockierung von Versetzungen zudem eine größere Wirkung, als wenn diese Elemente ausgeschieden (in Form von A1N) vorliegen würden. Hinsichtlich des geforderten Eigenschaftsprofils (niedrige Dehnwerte) erweist sich die Kombination geringer Aluminium-Gehalte in Kombination mit geringen Stickstoff- und Kohlenstoff-Gehalten somit als besonders günstig.

Mangan vermeidet die andernfalls durch Bildung von FeS hervorgerufene Warmbrüchigkeit, indem Schwefel in Form von MnS ausgeschieden wird. Daher werden erfindungsgemäß dem Stahl mindestens 0,01 Gewichts-% Mangan zugesetzt. Bei einem Mangan-Gehalt von mehr als 0,7 Gewichts-% wird der Stahl jedoch zu hart und seine Formbarkeit verschlechtert sich infolge der Härtung durch in fester Lösung vorliegendes Mangan. Ein optimaler Kompromiß zwischen den negativen und positiven Eigenschaften des Mangans kann bei einem erfindungsgemäßen Stahl erreicht werden, wenn der Mn-Gehalt ≥ 0,4 Gewichts-% und ≤ 0,6 Gewichts-%, vorzugsweise gleich 0,5 Gewichts-%, ist.

Phosphor ist ein Substitutionslegierungselement mit einem großen Härtungseffekt bei fester Lösung. Eine übermäßige Härtung des Stahls verschlechtert jedoch die Verformbarkeit. Daher ist erfindungsgemäß der P-Gehalt auf Werte unter 0,1 Gewichts-% beschränkt.

Schwefel bildet sulfidartige, nichtmetallische Einschlüsse, durch welche die Ätzbarkeit eines aus dem Stahl hergestellten Blechs negativ beeinflußt wird. Daher ist der S-Gehalt erfindungsgemäß kleiner als 0,1 Gewichts-%.

Aluminium wird während der Stahlherstellung zur Desoxidierung zugegeben. In Verbindung mit Stickstoff kann es dabei, wie erwähnt, zur Entstehung von AlN kommen. Diese Aluminium-Nitride führen neben einer Abnahme der Ätzbarkeit zu einem Ansteigen der Härte des Stahls. Daher ist der Anteil an Al_{säurelöslich} erfindungsgemäß auf weniger als 0,008 Gewichts-% beschränkt. Dabei sollte der A1-Gehalt so gering wie möglich sein, weshalb er nach einer bevorzugten Ausgestaltung der Erfindung < 0,003 Gewichts-% ist.

Ein Chrom-Gehalt wird mit einem Gehalt von maximal 0,1 Gewichts-% zugegeben, weil durch dieses Element die Haftfähigkeit des Oxidfilms erhöht wird, welcher im Zuge der Maskenherstellung durch ein Schwärzungsglühen erzeugt wird. Wird einem Stahl der erfindungsgemäßen Art jedoch mehr als 0,1 Gewichts-% an Chrom zugegeben, so steigt dessen Härte zu stark an, um noch die erforderliche Verformbarkeit zu besitzen.

Molybdän begünstigt als Element mit einer großen Atomradiendifferenz gegenüber Eisen die Kriechbeständigkeit und damit die Beständigkeit gegen Relaxation des Stahlmaterials im Zuge der Fertigung von Bauteilen, insbesondere Loch- oder Grillmasken, für Bildröhren. Bei Gehalten von mehr als 0,08 Gewichts-% behindert Mo allerdings die Rekristallisation bei einer ggf. durchgeführten Zwischenglühung zu stark. Ein optimaler Einfluß des Molybdän auf einen erfindungsgemäßen Stahl ergibt sich, wenn der Gehalt an Mo < 0,006 Gewichts-% ist.

Zinn wirkt in gleicher Weise positiv auf die Kriechbeständigkeit wie Molybdän. Gleichzeitig verursacht Zinn jedoch auch eine Versprödung des Stahls. Daher ist der Zinn-Gehalt erfindungsgemäß auf Werte < 0,015 Gewichts-% beschränkt.

Gemäß einer weiteren vorteilhaften Ausgestaltung der Erfindung ist es zudem vorgesehen, dem Stahl bis zu 0,3 Gewichts-% Wolfram zuzusetzen. Durch diese Zugabe wird die Kriechfestigkeit weiter verbessert.

Der erfindungsgemäß verwendete Stahl eignet sich aufgrund seiner hohen Formstabilität unter starker Belastung, seiner guten Ätzbarkeit und seinen magnetischen Eigenschaften in hervorragender Weise zur Herstellung von Schatten-, Loch- oder Grillmasken, Rahmen oder Abschirmkappen für Bildröhren.

Hinsichtlich des Verfahrens wird die voranstehend angegebene Aufgabe dadurch gelöst, dass Masken, Abschirmkappen oder Rahmen für Bildröhren unter Verwendung eines Stahls hergestellt werden, der folgende Zusammensetzung aufweist (in Gewichts-%):

| | |
|---|---|
| C | 0,0001 - 0,01 %, |
| N | 0,0001 - 0,0035 %, |
| Mn | 0,01 - 0,7 %, |
| Si | < 0,03 %, |
| P | < 0,1 %, |
| S | < 0,1 %, |
| Al_{säurelöslich} | < 0,003 %, |
| Cr | < 0,1 %, |
| Mo | 0,0001 - 0,08 %, |
| Sn | < 0,015 %, |
| W | ≤ 0,3 % |

und als Rest Eisen und übliche Verunreinigungen,
wobei folgende Arbeitsschritte durchlaufen werden:
- Erschmelzen des Stahls,
- kontinuierliches Vergießen des erschmolzenen Stahls zu Brammen oder Dünnbrammen,
- Glühen der gegossenen Brammen oder Dünnbrammen bei einer Temperatur von 1050 - 1250 °C,
- Warmwalzen der geglühten Brammen oder Dünnbrammen bei Endwalztemperaturen von 800 - 940 °C zu einem Warmband mit einer Dicke von 0,7 - 4,5 mm,
- Haspeln des Warmbandes bei einer Temperatur von 300 - 650 °C,
- Kaltwalzen des Bandes auf die Enddicke bei einem Reduzierungsverhältnis von 40 - 90 % pro Kaltwalzschritt,
- Erzeugen der Masken, Abschirmkappen oder Rahmen aus dem erhaltenen Kaltband.

Bei Einhaltung der erfindungsgemäßen Verfahrensschritte erhält man ausgehend von einem erfindungsgemäßen Stahl ein kaltgewalztes Stahlblech, welches eine überragende Ätzbarkeit und Kriechbeständigkeit besitzt. Dabei schließen sich an die erfindungsgemäßen Verfahrensschritte die üblicherweise bei der Herstellung der in Rede stehenden Bauteile für Bildröhren durchlaufenen Verfahrensschritte an.

Erforderlichenfalls kann das Kaltwalzen mehrstufig durchgeführt werden, wobei es, je nach Art des herzustellenden Produkts, ebenso zweckmäßig sein kann, zwischen den Stufen des Kaltwalzens ein Zwischenglühen bei einer Temperatur von 300 - 800 °C durchzuführen. Dabei kann das Zwischenglühen als Haubenglühung oder in einem Durchlaufofen durchgeführt werden. Zur Verbesserung der Maßhaltigkeit und Oberflächenbeschaffenheit ist es darüber hinaus günstig, wenn das kaltgewalzte Stahlband nach dem Kaltwalzen nachgewalzt wird.

Nachfolgend wird die Erfindung anhand eines Ausführungsbeispiels näher erläutert.

In Tabelle 1 ist die Zusammensetzung von zur Herstellung von drei erfindungsgemäßen Stahlblechen E1,E2 und E3 und zwei Vergleichsblechen V1,V2 verwendeten Stähle in Massen-% angegeben. Zudem ist in Tabelle 1 die Dicke des jeweiligen Blechs in mm verzeichnet.

Jeder der aluminiumberuhigten Stähle wurde in einem Oxygenstahlwerk unter Anwendung einer Vakuumbehandlung erschmolzen und kontinuierlich auf einer Stranggußanlage zu Brammen vergossen. Zur Homogenisierung wurden die Brammen anschließend bei einer Temperatur von ca. 1250 °C geglüht.

Bei den basierend auf einem erfindungsgemäßen Stahl hergestellten Blechen E1,E2,E3 wurden die geglühten Brammen zu einem 3 mm dicken Warmband warmgewalzt, wobei die Endwalztemperatur 890 °C betrug. Das Warmband wurde bei einer Haspeltemperatur von ca. 570 °C aufgewickelt. Dann wurde das Warmband gebeizt und in einer ersten Stufe auf eine Zwischendicke von 0,8 mm kaltgewalzt. Daran schloß sich eine in einer Haubenglühe gemäß einem Haubenzyklus durchgeführte Zwischenglühung bei ca. 580 °C an.

Der Zwischenglühung folgte eine zweite Stufe des Kaltwalzens, in welcher das Band auf eine Zwischendicke von 0,2 mm kaltgewalzt wurde. Anschließend wurde eine Kurzzeitglühung bei 750 °C vorgenommen, bevor das Band bei der Variante E1 auf seine Enddicke von 0,081 mm, bei der Variante E2 auf seine Enddicke von 0,067 mm und bei der Variante E3 auf 0,076 mm nachgewalzt wurde.

Im Fall des außerhalb der Erfindung liegenden Vergleichsblechs V1 wurde die geglühte Bramme zu einem Warmband von 2,5 mm Dicke bei einer Walzendtemperatur von ca. 870 °C gewalzt und bei einer Temperatur von ca. 580 °C gehaspelt. Nach dem Beizen und nach einem Kaltwalzen auf eine Zwischendicke von 0,8 mm wurde eine Haubenglühung bei ca. 650 °C gemäß einem Haubenzyklus vorgenommen. Anschließend wurde in einer weiteren Stufe das Band auf eine Enddicke von 0,1 mm kaltgewalzt.

Bei dem ebenfalls nicht erfindungsgemäßen Vergleichsblech V2 wurde die Bramme zu einem 3 mm dicken Warmband gewalzt, wobei die Walzendtemperatur bei 860 °C lag. Das Warmband wurde anschließend bei einer Temperatur von 590 °C aufgewickelt. Daran schloß sich ein Beizen und ein Kaltwalzen auf eine Zwischendicke von 0,9 mm an, auf welches eine Haubenglühung bei ca. 650 °C folgte. Das zwischengeglühte Kaltband wurde anschließend in einer zweiten Stufe auf seine Enddicke von 0,1 mm kaltgewalzt.

Die Kriechbeständigkeit läßt sich näherungsweise anhand der im Zugversuch erzielten Bruchdehnung A₈₀ abschätzen. In Tabelle 2 sind daher einerseits die mechanischen Eigenschaften "Zugfestigkeit Rₘ" und "Bruchdehnung in Querrichtung A₈₀" verzeichnet, die ein Blech besitzt, welches nach Abschluß der Kaltbandherstellung, also im Fall der erfindungsgemäßen Bleche E1,E2,E3 nach dem Nachwalzen und im Fall der Vergleichsbleche V1,V2 nach der zweiten Stufe des Kaltwalzens, nicht mehr geglüht worden ist. Andererseits sind in Tabelle 2 die mechanischen Eigenschaften "Zugfestigkeit R_{m/470 °C geglüht}" und "Bruchdehnung in Querrichtung A_{80/470°C geglüht}" angegeben, die sich einstellen, wenn die Bleche E1,E2,E3,V1,V2, wie beispielsweise im Zuge der Fertigung von Loch- oder Grillmasken für Bildröhren, nach dem Kalt- oder Nachwalzen einer weiteren Glühbehandlung bei ca. 470 °C unterzogen werden.

Hervorragende Kriechbeständigkeiten, die ein Blech für die Verwendung zur Herstellung von Bauteilen für Bildröhren geeignet machen, liegen vor, wenn die Bruchdehnung A_{80/470°C geglüht} < 1 % ist. Zudem sollte die Zugfestigkeit R_{m/470°C geglüht} oberhalb 600 N/mm² liegen.

Für die Bleche E1,E2,E3 sind jeweils Bruchdehnungen A_{80/470°C geglüht} von bedeutend weniger als 1 % bei gleichzeitigen Zugfestigkeiten R_{m/470°C geglüht} von jeweils deutlich mehr als 600 N/mm² festgestellt worden, worin sich die hervorragende Kriechbeständigkeit und Eignung von erfindungsgemäß hergestellten Stahlblechen erweist.

Demgegenüber weisen die nicht erfindungsgemäßen Vergleichsbleche V1,V2 Bruchdehnungen A_{80/470°C geglüht} von 10,5 % bzw. 5,5 % und beim Vergleichsblech V1 eine Zugfestigkeit R_{m/470°C geglüht} von weniger als 600 N/mm² auf. Diese Bleche erreichen folglich sowohl hinsichtlich ihrer Kriechbeständigkeit als auch hinsichtlich ihrer Festigkeit die von erfindungsgemäßen Blechen erfüllten, für die Verwendung zur Herstellung von Bauteilen für Bildröhren ausschlaggebenden Anforderungen nicht.

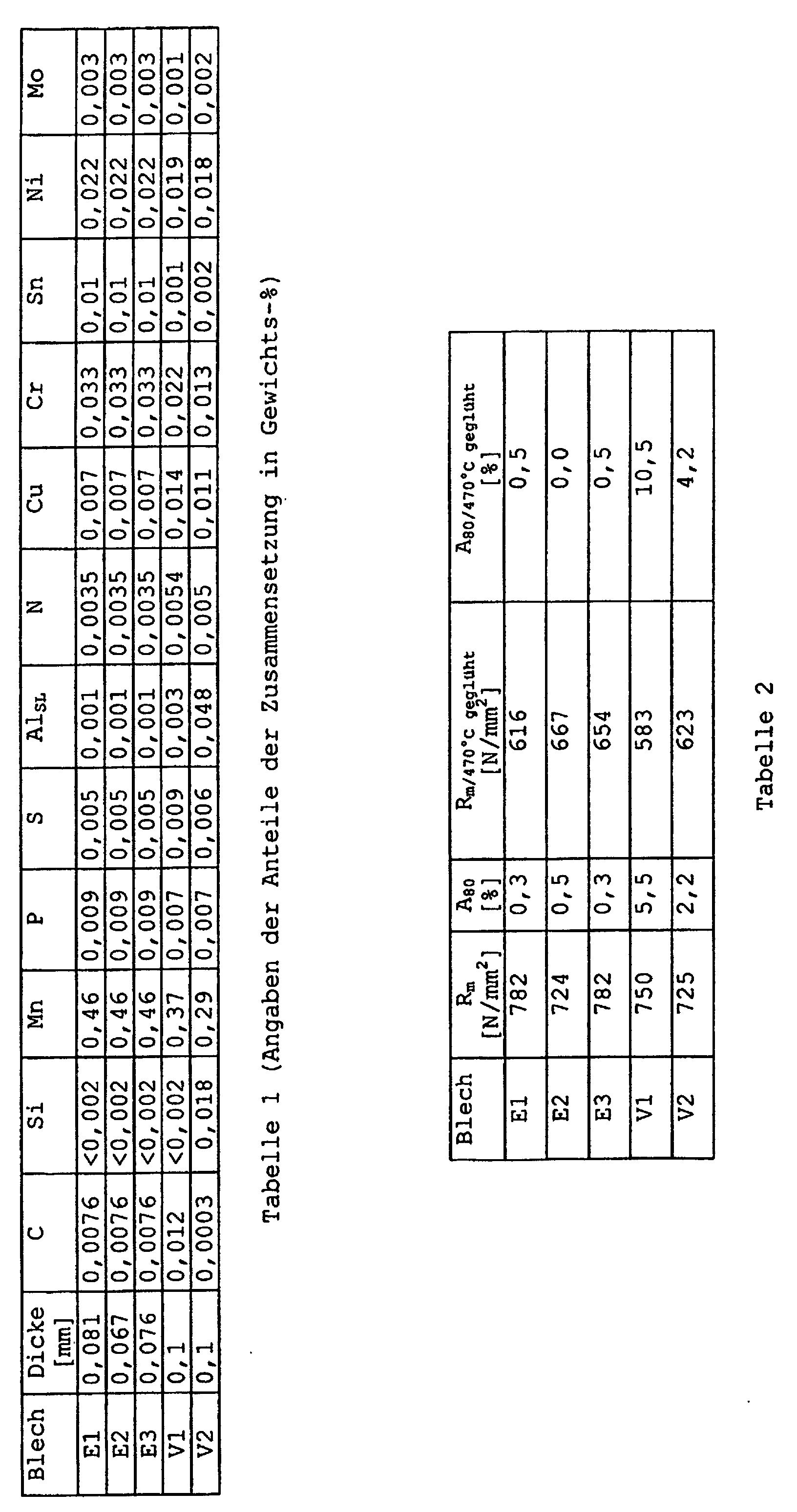

## Patentansprüche

1. Verwendung eines Stahls mit folgender Zusammensetzung (in Gewichts-%):
| | |
|---|---|
| C | 0,0001 - 0,01 %, |
| N | 0,0001 - 0,0035 %, |
| Mn | 0,01 - 0,7 %, |
| Si | < 0,03 %, |
| P | < 0,1 %, |
| S | < 0,1 %, |
| Al_{säurelöslich} | < 0,003 %, |
| Cr | < 0,1 %, |
| Mo | 0,0001 - 0,08 %, |
| Sn | < 0,015 %, |
| W | ≤ 0,3 % |
und als Rest Eisen und übliche Verunreinigungen für die Herstellung von Masken, Abschirmkappen oder Rahmen für Bildröhren.

2. Verwendung nach Anspruch 1, **dadurch gekennzeichnet**, daβ der Stahl < 0,008 Gewichts-% C enthält.

3. Verwendung nach einem der voranstehenden Ansprüche, **dadurch gekennzeichnet, daß** der Stahl ≤ 0,003 Gewichts-% N enthält.

4. Verwendung nach einem der voranstehenden Ansprüche, **dadurch gekennzeichnet, daß** der Stahl ≥ 0,4 Gewichts-% und ≤ 0,6 Gewichts-%, insbesondere 0,5 Gewichts-%, Mn enthält.

5. Verwendung nach einem der voranstehenden Ansprüche, **dadurch gekennzeichnet, daß** der Stahl < 0,006 Gewichts-% Mo enthält.

6. Verfahren zur Herstellung von Masken, Abschirmkappen oder Rahmen für Bildröhren unter Verwendung eines Stahls folgender Zusammensetzung (in Gewichts-%):
| | |
|---|---|
| C | 0,0001 - 0,01 %, |
| N | 0,0001 - 0,0035 %, |
| Mn | 0,01 - 0,7 %, |
| Si | < 0,03 %, |
| P | < 0,1 %, |
| S | < 0,1 %, |
| Al_{säurelöslich} | < 0,003 %, |
| Cr | < 0,1 %, |
| Mo | 0,0001 - 0,08 %, |
| Sn | < 0,015 %, |
| W | ≤ 0,3 % |
und als Rest Eisen und übliche Verunreinigungen,
umfassend folgende Arbeitsschritte
- Erschmelzen des Stahls,
- kontinuierliches Vergießen des erschmolzenen Stahls zu Brammen oder Dünnbrammen,
- Glühen der gegossenen Brammen oder Dünnbrammen bei einer Temperatur von 1050 - 1250 °C,
- Warmwalzen der geglühten Brammen oder Dünnbrammen bei Endwalztemperaturen von 800 - 940 °C zu einem Warmband mit einer Dicke von 0,7 - 4,5 mm,
- Haspeln des Warmbandes bei einer Temperatur von 300 - 650 °C,
- Kaltwalzen des Bandes auf die Enddicke bei einem Reduzierungsverhältnis von 40 - 90 % pro Kaltwalzschritt,
- Erzeugen der Masken, Abschirmkappen oder Rahmen aus dem erhaltenen Kaltband.

7. Verfahren nach Anspruch 6, **dadurch gekennzeichnet, daß** das Kaltwalzen mehrstufig durchgeführt wird.

8. Verfahren nach Anspruch 7, **dadurch gekennzeichnet, daß** zwischen den Stufen des Kaltwalzens ein Zwischenglühen bei einer Temperatur von 300 - 800 °C durchgeführt wird.

9. Verfahren nach Anspruch 8, **dadurch gekennzeichnet, daß** das Zwischenglühen als Haubenglühung durchgeführt wird.

10. Verfahren nach Anspruch 8, **dadurch gekennzeichnet, daß** das Zwischenglühen kontinuierlich in einem Durchlaufofen durchgeführt wird.

11. Verfahren nach einem der Ansprüche 6 bis 10, **dadurch gekennzeichnet, daß** das kaltgewalzte Stahlband nach dem Kaltwalzen nachgewalzt wird.

12. Verfahren nach einem der Ansprüche 6 bis 11, **dadurch gekennzeichnet, daß** das kaltgewalzte Stahlband ein weiteres mal geglüht wird und nach dem Glühen eine Zugfestigkeit (R_{m/470 °C geglüht}) von mehr als 600 N/mm² und Bruchdehnung in Querrichtung (A_{80/470°C geglüht}) von weniger als 1 % aufweist.

## Claims

1. A use of a steel having the following composition (in percent by weight):
| | |
|---|---|
| C | 0.0001 - 0.01 %, |
| N | 0.0001 - 0.0035 %, |
| Mn | 0.01 - 0.7 %, |
| Si | < 0.03 %, |
| P | < 0.1 %, |
| S | < 0.1 %, |
| Al (acid soluble) | < 0.003 %, |
| Cr | < 0.1 %, |
| Mo | 0.0001 - 0.08 %, |
| Sn | < 0.015 %, |
| W | ≤ 0.3 %, |
the remainder being iron and the usual impurities, for the production of masks, shielding covers or frames for picture tubes.

2. The use according to Claim 1, **characterized in that** the steel contains < 0.008 wt% C.

3. The use according to one of the preceding claims, **characterized in that** the steel contains ≤ 0.003 wt% N.

4. The use according to one of the preceding claims, **characterized in that** the steel contains ≥ 0.4 wt% Mn and ≤ 0.6 wt% Mn, in particular 0.5 wt% Mn.

5. The use according to one of the preceding claims, **characterized in that** the steel contains < 0.006 wt% Mo.

6. A method of producing masks, shielding covers or frames for picture tubes using a steel having the following composition (in percent by weight):
| | |
|---|---|
| C | 0.0001 - 0.01 %, |
| N | 0.0001 - 0.0035 %, |
| Mn | 0.01 - 0.7 %, |
| Si | < 0.03 %, |
| P | < 0.1 %, |
| S | < 0.1 %, |
| Al (acid soluble) | < 0.003 %, |
| Cr | < 0.1 %, |
| Mo | 0.0001 - 0.08 %, |
| Sn | < 0.015 %, |
| W | ≤ 0.3 %, |
the remainder being iron and the usual impurities, comprising the following steps
- smelting the steel,
- continuously casting the molten steel to slabs or thin slabs,
- annealing the cast slabs or thin slabs at a temperature of 1050 - 1250 °C,
- hot-rolling the annealed slabs or thin slabs at a final rolling temperature of 800 - 940 °C to form a hot-rolled strip with a thickness of 0.7 - 4.5 mm,
- rolling up the hot-rolled strip at a temperature of 300 - 650 °C,
- cold-rolling the strip to the final thickness at a reduction ratio of 40 - 90 % per cold-rolling step,
- producing the masks, shielding covers or frames from the resulting cold-rolled strip.

7. The method according to Claim 6, **characterized in that** the cold-rolling is performed in multiple steps.

8. The method according to Claim 7, **characterized in that** an intermediate annealing is performed at a temperature of 300 - 800 °C between the steps of the cold-rolling.

9. The method according to Claim 8, **characterized in that** the intermediate annealing is performed as hood-type annealing.

10. The method according to Claim 8, **characterized in that** the intermediate annealing is performed continuously in a continuous furnace.

11. The method according to one of Claims 6 through 10, **characterized in that** the cold-rolled steel strip is rerolled after being cold-rolled.

12. The method according to one of Claims 6 through 11, **characterized in that** the cold-rolled steel strip is annealed once more, and after annealing, it has a tensile strength (R_{m/470 °C annealed}) of more than 600 N/mm² and an elongation at break in the transverse direction (A_{80//470 °C annealed}) of less than 1 %.

## Revendications

1. Utilisation d'un acier ayant la composition suivante (en % en poids) :
| | |
|---|---|
| C | 0,0001 - 0,01% |
| N | 0,0001 - 0,0035% |
| Mn | 0,01 - 0,7% |
| Si | < 0,03% |
| P | < 0,1% |
| S | < 0,1% |
| Alsoluble dans l'acide | < 0,003% |
| Cr | < 0,1% |
| Mo | 0,0001 - 0,08% |
| Sn | < 0,015% |
| W | ≤ 0,3% |
et le reste étant du fer et des impuretés usuelles pour la fabrication de masques, de capots de blindage ou de cadres pour tubes cathodiques.

2. Utilisation selon la revendication 1, **caractérisée en ce que** l'acier comprend < 0,008% C en poids.

3. Utilisation selon l'une quelconque des revendications précédentes, **caractérisée en ce que** l'acier comprend ≤ 0,003% N en poids.

4. Utilisation selon l'une quelconque des revendications précédentes, **caractérisée en ce que** l'acier comprend ≥ 0,4% Mn en poids et ≤ 0,6% Mn en poids, en particulier 0,5% Mn en poids.

5. Utilisation selon l'une quelconque des revendications précédentes, **caractérisée en ce que** l'acier comprend < 0,006% Mo en poids.

6. Procédé pour la fabrication de masques, de capots de blindage ou de cadres pour tubes cathodiques par l'utilisation d'un acier ayant la composition suivante (en % en poids) :
| | |
|---|---|
| C | 0,0001 - 0,01% |
| N | 0,0001 - 0,0035% |
| Mn | 0,01 - 0,7% |
| Si | < 0,03% |
| P | <0,1% |
| S | < 0,1% |
| Alsoluble dans l'acide | < 0,003% |
| Cr | < 0,1% |
| Mo | 0,0001 - 0,08% |
| Sn | < 0,015% |
| W | ≤ 0,3% |
et le reste étant du fer et des impuretés usuelles,
comprenant les étapes opératoires suivantes
- élaboration de l'acier,
- coulée continue de l'acier élaboré pour donner des brames ou des brames minces,
- recuit des brames ou des brames minces coulées à une température de 1050°C - 1250°C,
- laminage à chaud des brames ou des brames minces recuites à des températures de laminage finales de 800°C - 940°C pour donner un feuillard laminé à chaud ayant une épaisseur de 0,7 mm - 4,5 mm,
- bobinage du feuillard laminé à chaud à une température de 300°C - 650°C,
- laminage à froid du feuillard jusqu'à l'épaisseur finale avec un rapport de réduction de 40% - 90% par passe de laminage,
- production des masques, capots de blindage ou cadres pour tubes cathodiques à partir du feuillard laminé à froid.

7. Procédé selon la revendication 6, **caractérisé en ce que** le laminage à froid se fait en plusieurs étapes.

8. Procédé selon la revendication 7, **caractérisé en ce qu'**un recuit intermédiaire à une température de 300°C - 800°C est réalisé entre les étapes de laminage à froid.

9. Procédé selon la revendication 8, **caractérisé en ce que** le recuit intermédiaire est réalisé comme un recuit sous cloche.

10. Procédé selon la revendication 8, **caractérisé en ce que** le recuit intermédiaire est réalisé en continu dans un four continu.

11. Procédé selon l'une quelconque des revendications 6 à 10, **caractérisé en ce que** le feuillard laminé à froid est écroui après le laminage à froid.

12. Procédé selon l'une quelconque des revendications 6 à 11, **caractérisé en ce que** le feuillard laminé à froid est recuit une nouvelle fois et présente, après le recuit, une résistance à la traction (Rm/470°C recuit) de plus de 600 N/mm² et un allongement à la rupture dans le sens transversal (A80/470°C recuit) de moins de 1%.
